# EUROPEAN PATENT APPLICATION

(11) **EP 4 503 707 A1**
(43) Date of publication of application: **05.02.2025**
(21) Application number: 24190860.7
(22) Date of filing: 25.07.2024
(51) Int. Cl.: H04W 24/02, H04W 24/04, H04W 36/00

(54) **VIRTUAL RAN CELL SITE RESILIENCY AND ENERGY EFFICIENCY**

(30) Priority: 29.07.2023 IN 202321051130; 22.07.2024 US 202418779313
(71) Applicant: Mavenir Systems, Inc., Richardson, TX 75081 (US)
(72) Inventor: BAKER, John, Denton, 76208 (US); LOURDU RAJA, Charles Santhosam, 560048 Bangalore (IN); BARERIA, Jyotirmay, Mckinney, 75070 (US); RAJAGOPAL, Sridhar, Plano, 75025 (US)
(74) Representative: Studio Torta S.p.A.

(57) **Abstract**

A method for providing enhanced resiliency of a radio access network (RAN) cell site having multiple sectors includes: providing a first radio unit (RU) simultaneously serving a first set of sectors with a first set of antenna streams; providing a second RU simultaneously serving at least a second set of sectors with a second set of antenna streams; providing a third RU simultaneously serving at least a third set of sectors with a third set of antenna streams; and reconfiguring, by a network management unit, at least the first set of sectors with a reduced antenna configuration in the case of one of a failure or shutdown of the first RU, and all sectors of the cell site are served by the second RU and the third RU to remain in service.

## Description

### BACKGROUND OF THE INVENTION

### 1. Field of the Invention

The present disclosure is related to Radio Access Network (RAN), and relates more particularly to improvements in resiliency of virtualized wireless networks deploying multiple antennas per cell.

### 2. Description of Related Art

In today's wireless networks, a typical macro site consists of three sectors and 3 different cells serving each sector for the same frequency band in any system that employs frequency reuse factor of 1. Examples include, but are not limited to, 3G, 4G, 5G, and NBIOT. Each of the sectors is typically served by one RU HW or RU and DU HW. DU servers and/or Base Band Units (BBUs) at the cell site, along with RUs, constitute the bulk of the cost of a wireless network deployment. In a typical use case of wireless macro deployment, each site is divided into 2, 3, or 4 sectors based on subscriber density. This means we need 2, 3, or 4 RUs per site for each carrier (or band, or group of bands), and one or more BBU (which comprises CU and DU) and/or server. Due to the huge cost of these components and volume of such HW in a network deployment, network operators and vendors with proprietary silicon-based solutions do not have any redundancy for these HW components at a cell site. This results in an outage of a given site (or a sector of a site) whenever there is HW and/or SW failure at the RU, and an outage of the entire site (across all sectors) when a server and/or BBU goes down, in the case the site is served by a single BBU/server. This results in service interruption for a given site until the HW can be physically replaced at the cell site (which could take several days in remote and/or inaccessible areas) in case of HW failure, or a long service down time for a sector and/or the entire site in case of SW failure. This is currently the trade-off between incurring the cost of additional HW at the cell site vs. sacrificing resiliency (100% availability of coverage at the site).

Conventionally, wireless network operators opted for a trade-off with respect to the cell availability in multiple ways, but without having any resiliency built into each site due to exorbitant costs involved in providing resiliency with redundant HW at each site. To minimize the site outage, one option the operators resort to is providing more cell sites for a given geographical coverage, which allows a good density of UEs with an alternative site which can provide coverage in the event of failure. This means the solution requires more sites, and consequently increased cost of setting up the infrastructure with the additional sites. Another conventional option for outage mitigation is to increase the overlap between sectors within a site, to mitigate the impact of a given sector losing coverage in the event of an RU going down. This results in poor performance of the air interface, due to higher interference caused by larger overlap in coverage during normal operation. In case a network operator has more than one carrier and/or band, which necessitates more than one RU per sector, failure of one RU does not render the sector out of coverage as the remaining RUs (or bands, or carriers) in the same sector provide coverage with reduced performance (i.e., taking higher loads in the remaining carriers). Conventionally, vendors have employed load-balancing across sectors and/or sites to distribute the load from a loaded sector to a neighboring cell by moving UEs and/or mobile devices that have coverage from such neighboring cells. However, this requires the network to be designed to have a good amount of overlap (increasing the number of sites per unit area), which again increases cost.

The above-discussed conventional solutions are sub-optimal because the coverage comes at the cost of increased cell density and/or increased interference (which leads to poor air interface performance).

Therefore, there is a need for a solution that addresses the problem of resiliency of BBU, server and/or RU at the site i) without having to add additional standby HW components to take over the service in the event of a component (e.g., HW or SW) failure at the cell site, and ii) without incurring significant additional cost.

### SUMMARY

Accordingly, the present disclosure provides a system and method to achieve an enhanced resiliency of BBU, server and/or RU at the site i) without having to add additional standby HW components to take over the service in the event of a component (e.g., HW or SW) failure at the cell site, and ii) without incurring significant additional cost.

The proposed solution in the present disclosure does not rely on increased overlap in coverage across sites and/or sectors, as failure of one RU does not render that cell and/or carrier out of service. The solution according to the present disclosure enables the wireless system to maintain operation at reduced throughput during failure of an RU. Even in sites deploying only a single carrier, based on the example architecture and methods provided in this disclosure, a failure of an RU does not lead to shut down of a cell; instead, it merely reduces the MIMO capability of the cell. This option is better from a cost perspective than removing the coverage completely or adding more cells just for this failure duration. It should be noted that increasing overlap results in poor performance for prior art solutions even when there is no hardware failure, and hence the prior art solutions incur a permanent performance degradation with higher cost. In contrast, the proposed solution according to the present disclosure allows improving the air interface performance by reducing overlaps during normal, steady-state operation, and provides a low-cost option to continue the service in sectors with RU failure (e.g., with reduced throughput and/or reduced MIMO layers). Once the non-working RU is replaced, the performance can be restored to normal level, thereby minimizing the steady-state performance issue with minimal cost.

The proposed solution according to the present disclosure also achieves improved energy efficiency, by turning down RUs (by design) during the low traffic hours to maximize the energy saving. This brings in much higher energy saving compared to existing schemes in prior art which require maintaining at least one RU per sector to be in POWER ON state to provide uninterrupted coverage (e.g., prior known techniques such as MIMO layer shutdown or carrier shut down methods for energy saving). Keeping a portion of the RU in transmission state means that the RU cannot be completely powered off, especially the digital circuits which are typically serving all the antennas, and hence cannot be shut down fully. The proposed solution according to the present disclosure allows the use of one or more (i.e., k) RUs across multiple (i.e., n) sectors, where k <= n, with reduced throughput, whereby the remaining RUs can be shut down completely to maximize the energy saving.

According to an example embodiment of the system and method, a single RU HW is used for serving one or more antennas for two or more sectors and/or cells simultaneously, and each sector and/or cell is served by a combination of two or more RU hardware. This allows the physical coverage to be maintained even when one of the RUs fails, i.e., by using only those antennas (ports) which are being served by the remaining working RU units at the site. This example method can be implemented, e.g., for 2 transmitting antennas, 2 receiving antennas (2T2R) sites or 4 transmitting antennas, 4 receiving antennas (4T4R) sites, and can be applied to more than 4 antennas per sector in a similar manner.

According to an example embodiment of a method, the network management system (or DU) reconfigures the cells served in a site when one or more RUs become non-functional, such that that all geographical segments and/or sectors of the site continue to be in service with a reduced antenna configuration. In an example embodiment, the reconfiguration further entails corresponding changes to the System Information blocks that inform the antenna capabilities of the cell, based on available active antenna processing chains.

According to an example method, by connecting plurality of RUs to a given sector, energy efficiency during lean traffic hours can be achieved by shutting down one or more RUs while letting the remaining RUs serve all the sectors in a given site with reduced transmitting (Tx) and/or receiving (Rx) antennas and/or MIMO layers. This shut down can be rotated across RUs, e.g., across days and/or lean-hour windows, to minimize switch ON/OFF cycles for a given RU unit equally across the units.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### BRIEF DESCRIPTION OF THE DRAWINGS

Fig. 1 illustrates the physical network view with the interfaces at a cell site location with CU (optionally) at a data center and a Management system at the same or different data center away from the cell site.
Fig. 2a illustrates the conventional network configuration in which each RU serves all the antenna streams of a given sector, in a situation when there is no failure.
Fig. 2b illustrates the conventional network configuration in which each RU serves all the antenna streams of a given sector, in a situation when RU1 fails and leads to no service in Sector0.
Fig. 3a illustrates the scenario for single-RU-failure-resiliency connectivity as per the present disclosure.
Fig. 3b illustrates the situation when RU1 fails.
Fig. 4a illustrates the scenario for dual-RU-failure-resiliency connectivity, in a situation when no RU has failed.
Fig. 4b illustrates the scenario for dual-RU-failure-resiliency connectivity, in a situation when RU1 fails.
Fig. 4c illustrates the scenario for dual-RU-failure-resiliency connectivity, in a situation when RU1 and RU2 have failed.
Fig. 5a illustrates the connectivity for achieving both i) Server and/or BBU resiliency and ii) RU resiliency, in a normal situation when the cells across three sectors are hosted across 2 BBU and/or servers.
Fig. 5b illustrates the connectivity for achieving both i) server and/or BBU resiliency and ii) RU resiliency, in a situation when one of the server/BBU fails.
Fig. 5c illustrates the connectivity for achieving both i) server and/or BBU resiliency and ii) RU resiliency, in a situation when one BBU/server has gone down along with 2 RUs.
Figs. 6a illustrates the 2T2R 3-sector configuration with resiliency, in a situation when the network operation is in normal state.
Fig. 6b illustrates the 2T2R 3-sector configuration with resiliency, in a situation when RU1 fails.

### DETAILED DESCRIPTION

The present disclosure provides example embodiments of a system and a method for improving the resiliency of the cell site server/BBU and RU HW in a wireless network. These two components constitute the bulk of the cost of network deployment for the operator. In addition, the RUs in a wireless network consume more than 70% of the total power consumption of the entire wireless network. Having better resiliency and energy efficiency of these two critical HW (and associated SW) components is essential for efficient RAN network deployment in terms of capex and opex costs.

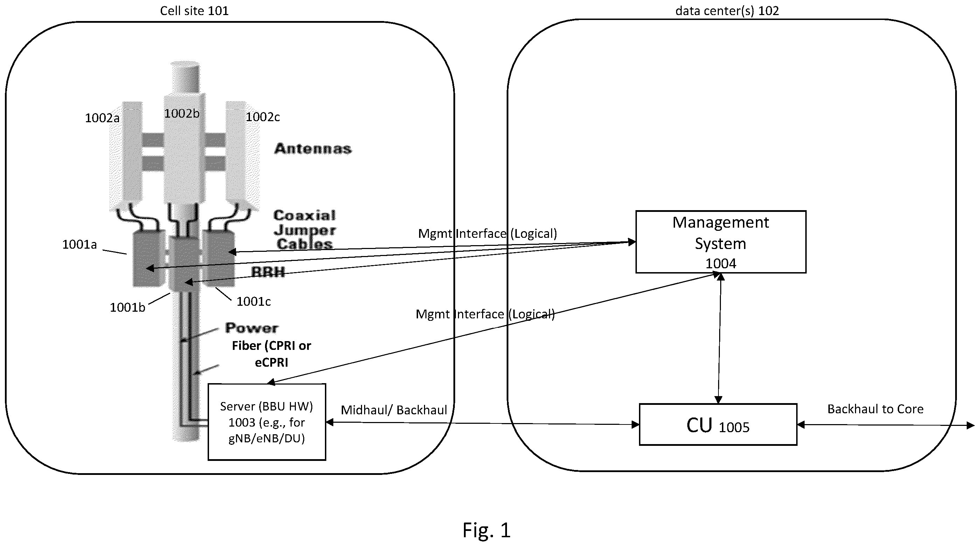

Fig. 1 illustrates the physical network view of an example network with the interfaces between a cell site location 101 and one or more data center(s) 102 in which a CU 1005 and a management system 1004 are implemented, away from the cell site location 101. Fig. 1 illustrates an example of a macro cell site 101 with three sector configuration with one radio per sector (e.g., remote radio heads (RRH) 1001a, 1001b, and 1001c, which are connected by coaxial jumper cables to respective antennas 1002a, 1002b and 1002c) and a single server and/or BBU hardware (HW) unit 1003 (e.g., for gNB, eNB, or DU). The management system 1004 configures and controls the DU network function (e.g., as implemented by unit 1003) and CU network function 1005 and monitors them for any failure. Any recovery and/or alarms on failure of a network function (NF) is managed by the management system 1004. DU/RU split can be either Split 7.2 (O-RAN FH Split option 7.2) or traditional Split 8.

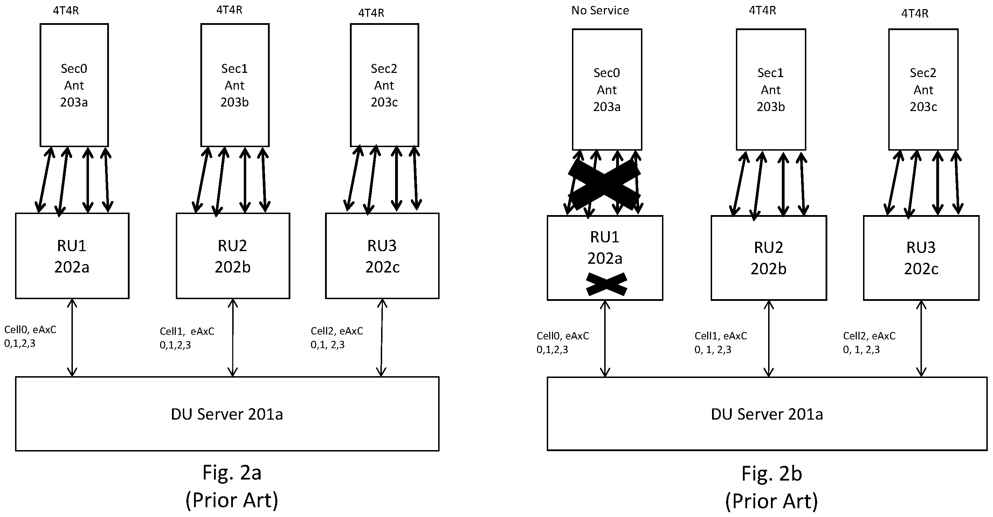

In contrast to the typical conventional network deployment (e.g., as shown in Figs. 2a and 2b), according to the example embodiments of the present disclosure, a modified cabled-RU-to-antenna connectivity is provided in order to achieve better resiliency against RU and/or server/BBU HW/SW failures. One of the core ideas of the present invention is to serve a single sector and/or cell with plurality of RUs with antenna streams of a given cell distributed across a plurality of RUs, with one or more of antenna streams of the given cell being generated (in Downlink) and/or consumed (in Uplink) by the plurality of RUs. This cross connection between the radios and antennas allows each sector to be still served by at least by one RU even when one or more RUs fail in a given site, albeit with a reduced number of antenna streams compared to no-RU-failure scenario, instead of rendering an entire sector to be without coverage (as would be the case in the prior art configuration, e.g., as shown in Fig. 2b). The different scenarios and different example embodiments of the proposed configurations for mitigating RU and/or server and/or BBU HW and/or SW failures are explained below.

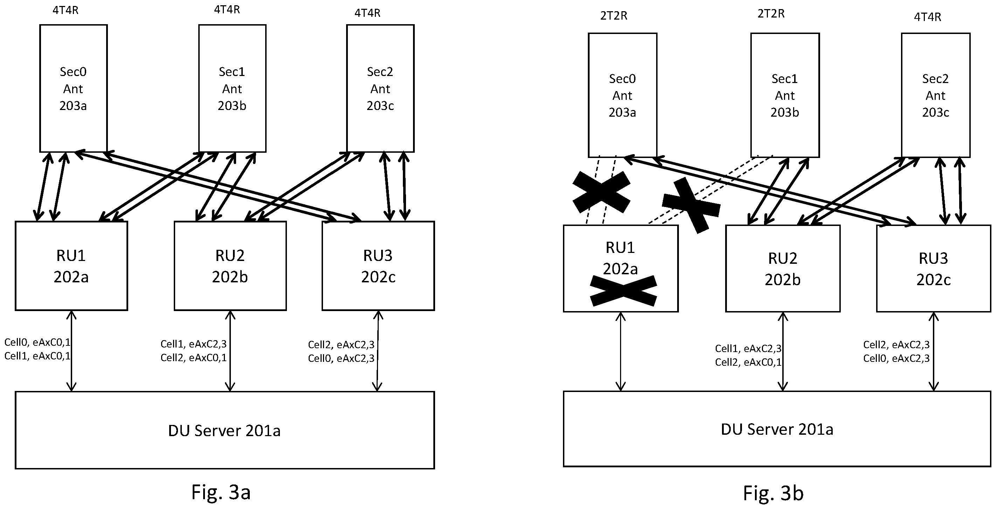

Figs. 2a and 2b illustrate the conventional network configuration in which each RU serves all the antenna streams of a given sector. Fig. 2a illustrates the normal operating situation when there is no failure in the illustrated system (i.e., DU server 201a, RU1 202a, RU2 202b, RU3 202c, Sector 0 antenna(s) 203a, Sector 1 antenna(s) 203b, and Sector 2 antenna(s) 203c). Fig. 2b depicts the situation when RU1 202a fails (as indicated by "X") and leads to no service in Sector 0. eAxC ID in Figs. 2a-2b refer to the O-RAN Control User Synchronization (CUS) Plane specification-based identifier for a given antenna stream on the FH interface from DU server 201a to a respective RU. As an example, in a 4T4R cell configuration with CAT-A radio, the DU server 201a sends four eAxC IDs represented in Fig. 2a as eAxC 0, 1, 2, and 3, corresponding to antenna ports 0, 1, 2, and 3. This nomenclature is applicable to Split 7.2 option as specified in the 3GPP specification regarding functional split options. The identifier is referred to as AxC ID in the case of CPRI-based FH interface, for Split 8 DU configuration, as per 3GPP specification definition of functional splits of gNB/eNB. In Figs. 3a-3b, 4a-4c, 5a-5c and 6a-6b, dotted lines with superimposed "X" between RU and antenna boxes indicate disabled antenna streams that are not working or not required due to energy saving state.

Fig. 3a illustrates the scenario for single-RU-failure-resiliency connectivity as per the present disclosure. Here, RU1 202a serves two antenna streams (Cell 0, eAxC 0, 1) for Sector 0 (corresponding to antenna(s) 203a), and two antenna streams (Cell 1, eAxC 0, 1) for Sector 1 (corresponding to antenna(s) 203b). Similarly, RU2 202b serves two antenna streams (Cell 1, eAxC 2, 3) for Sector 1 (corresponding to antenna(s) 203b), and two antenna streams (Cell 2, eAxC 0, 1) for Sector 2 (corresponding to antenna(s) 203c). In addition, RU3 202c serves two antenna streams (Cell 2, eAxC 2, 3) for sector 2 (corresponding to antenna(s) 203c), and two antenna streams (Cell 0, eAxC 2, 3) for Sector 0 (corresponding to antenna(s) 203a). In the configuration shown in Fig. 3a, Sectors 0, 1 and 2 (corresponding to antenna(s) 203a, 203b and 203c, respectively) are each configured as 4T4R configuration. In addition, DU server 201a is connected to RU1 202a, RU2 202b, and RU3 202c for sending the respective eAxC IDs.

Fig. 3b illustrates the situation when RU1 202a fails. In the example embodiment shown in Fig. 3b, the Management System reconfigures the Sectors 0 and 1 (corresponding to antenna(s) 203a and 203b) to 2T2R configuration, and Sector 2 (corresponding to antenna(s) 203c) remains as 4T4R (served by RU2 202b and RU3 202c). Given the failure of RU1 202a, Sector 0 (corresponding to antenna(s) 203a) is served by RU3 202c (antenna streams Cell 0, eAxC 2, 3), and Sector 1 (corresponding to antenna(s) 203b) is served by RU2 202b (antenna streams Cell 1, eAxC 2, 3). Variation of this method include always connecting the cross polarization of a given sector to one radio to maintain the orthogonality between the signals sent from the two cross polarizations.

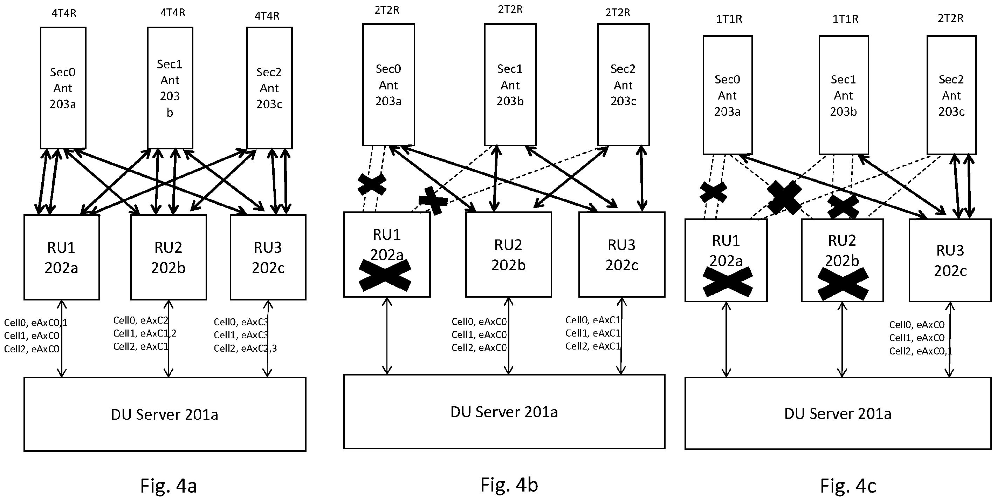

Fig. 4a, 4b, and 4c illustrate the scenario for dual-RU-failure-resiliency connectivity as per the present disclosure. In the example embodiment shown in Fig. 4a, RU1 202a serves two antenna streams (Cell 0, eAxC 0, 1) for Sector 0 (corresponding to antenna(s) 203a), one antenna stream (Cell 1, eAxC 0) for Sector 1 (corresponding to antenna(s) 203b), and one antenna stream (Cell 2, eAxC 1) for Sector 2 (corresponding to antenna(s) 203c). RU2 202b serves two antenna streams (Cell 1, eAxC 1, 2) for Sector 1 (corresponding to antenna(s) 203b), one antenna stream (Cell 2, eAxC 1) for Sector 2 (corresponding to antenna(s) 203c), and one antenna stream (Cell 0, eAxC 2) for Sector 0 (corresponding to antenna(s) 203a). RU3 202c serves two antenna streams (Cell 2, eAxC 2, 3) for Sector 2 (corresponding to antenna(s) 203c), one antenna stream (Cell 0, eAxC 3) for Sector 0 (corresponding to antenna(s) 203a), and one antenna stream (Cell 1, eAxC 3) for Sector 1 (corresponding to antenna(s) 203b). In the configuration shown in Fig. 4a, Sectors 0, 1 and 2 (corresponding to antenna(s) 203a, 203b and 203c, respectively) are each configured as 4T4R configuration. In addition, DU server 201a is connected to RU1 202a, RU2 202b, and RU3 202c for sending the respective eAxC IDs.

Fig. 4b illustrates the situation when RU1 202a has failed. In the example embodiment shown in Fig. 4b, the Management System reconfigures the the Sectors 0, 1 and 2 (corresponding to antenna(s) 203a, 203b and 203c, respectively) to 2T2R configuration from the original 4T4R configuration. Given the failure of RU1 202a, Sector 0 (corresponding to antenna(s) 203a) is served by RU3 202c (antenna stream Cell 0, eAxC 1) and RU2 202b (antenna stream Cell 0, eAxC 0); Sector 1 (corresponding to antenna(s) 203b) is served by RU2 202b (antenna stream Cell 1, eAxC 0) and RU 3 202c (antenna stream Cell 1, eAxC 1); and Sector 2 (corresponding to antenna(s) 203c) is served by RU2 202b (antenna stream Cell 2, eAxC 0) and RU 3 202c (antenna stream Cell 2, eAxC 1).

Fig. 4c illustrates the situation when RU1 and RU2 have failed. In the example embodiment shown in Fig. 4c, the Management System reconfigures each of the three sectors, i.e., Sectors 0 and 1 are reconfigured as 1T1R, and Sector 2 is reconfigured as 2T2R from the original 4T4R configuration. Given the failure of RU1 202a and RU2 202b, Sector 0 (corresponding to antenna(s) 203a) is served by RU3 202c (antenna stream Cell 0, eAxC 0); Sector 1 (corresponding to antenna(s) 203b) is served by RU 3 202c (antenna stream Cell 1, eAxC 0); and Sector 2 (corresponding to antenna(s) 203c) is served by RU 3 202c (antenna streams Cell 2, eAxC 0, 1).

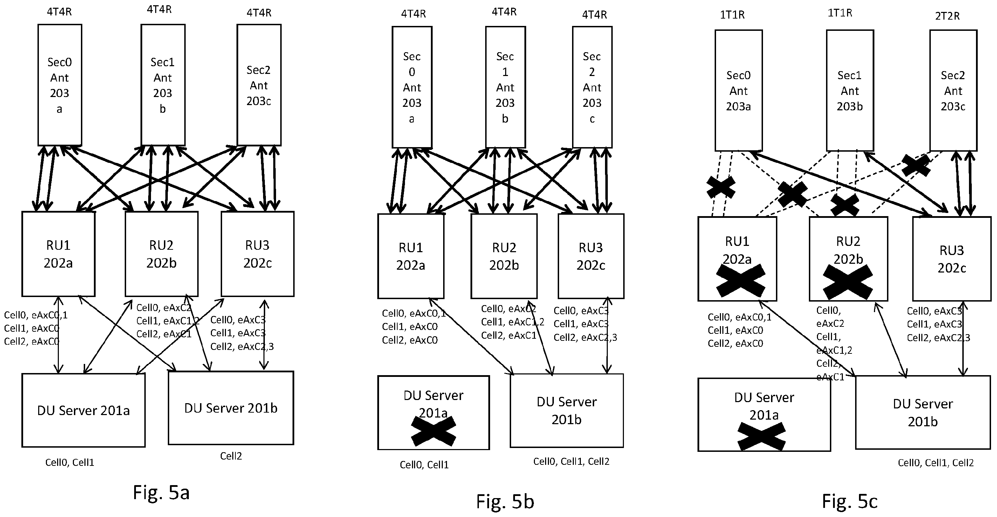

Figs. 5a, 5b, and 5c illustrate the connectivity and scenarios for achieving both i) server and/or BBU resiliency, and ii) RU resiliency. In the example embodiment shown in Fig. 5a, RU1 202a serves two antenna streams (Cell 0, eAxC 0, 1) for Sector 0 (corresponding to antenna(s) 203a), one antenna stream (Cell 1, eAxC 0) for Sector 1 (corresponding to antenna(s) 203b), and one antenna stream (Cell 2, eAxC 0) for Sector 2 (corresponding to antenna(s) 203c). RU2 202b serves two antenna streams (Cell 1, eAxC 1, 2) for Sector 1 (corresponding to antenna(s) 203b), one antenna stream (Cell 2, eAxC 1) for Sector 2 (corresponding to antenna(s) 203c), and one antenna stream (Cell 0, eAxC 2) for Sector 0 (corresponding to antenna(s) 203a). RU3 202c serves two antenna streams (Cell 2, eAxC 2, 3) for Sector 2 (corresponding to antenna(s) 203c), one antenna stream (Cell 0, eAxC 3) for Sector 0 (corresponding to antenna(s) 203a), and one antenna stream (Cell 1, eAxC 3) for Sector 1 (corresponding to antenna(s) 203b). In the configuration shown in Fig. 5a, Sectors 0, 1 and 2 (corresponding to antenna(s) 203a, 203b and 203c, respectively) are each configured as 4T4R configuration. In addition, each one of DU servers 201a and 201b is connected to RU1 202a, RU2 202b, and RU3 202c for sending the respective eAxC IDs.

Fig. 5a illustrates the normal operating situation in which the cells across the three sectors are hosted across 2 BBU and/or servers (e.g., DU server 201a handles Cell 0 and Cell 1; and DU server 201b handles Cell 2). When one of the server/BBU fails, e.g., DU server 201a as shown in Fig 5b, the other server/BBU (i.e., DU server 201b) handles all 3 sectors (i.e., Cell 0, Cell 1 and Cell 2) either i) with reduced configuration (e.g., 2T2R for all three sectors) when the server capacity is limited, or ii) with full capacity (4T4R configuration across all three sectors handled by DU server 201b, as shown in Fig. 5b) when the servers are capable of handling the full load.

Fig. 5c illustrates the situation when one BBU/server (e.g., DU server 201a) has gone down along with 2 RUs (e.g., RU1 202a and RU2 202b). In the example embodiment shown in Fig. 4c, the Management System reconfigures all three sectors to reduced antenna configurations (1T1R for Sectors 0 and 1, and 2T2R for Sector 2). Given the failure of RU1 202a and RU2 202b, Sector 0 (corresponding to antenna(s) 203a) is served by RU3 202c (antenna stream Cell 0, eAxC 3); Sector 1 (corresponding to antenna(s) 203b) is served by RU 3 202c (antenna stream Cell 1, eAxC 3); and Sector 2 (corresponding to antenna(s) 203c) is served by RU 3 202c (antenna streams Cell 2, eAxC 2, 3). In addition, given the failure of DU server 201a, the remaining DU server 201b handles all three sectors (i.e., Cell 0, Cell 1, and Cell 2).

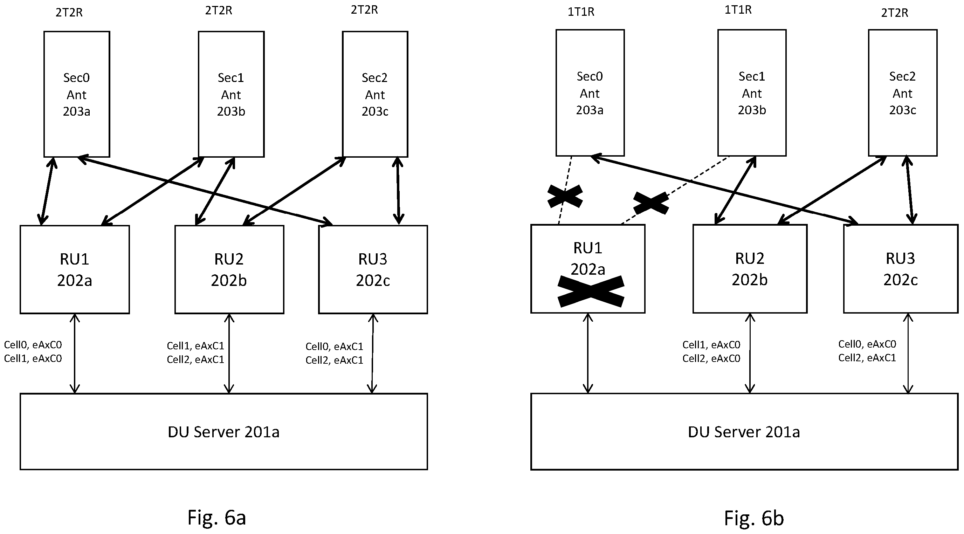

Figs. 6a and 6b illustrate the 2T2R 3-sector configuration with resiliency. In this example configuration, each RU (RU 1 202a, RU 2 202b, and RU 3 202c) serves two sectors (with 1 antenna each), such that any one RU failure does not remove both antenna streams for a given sector. Fig. 6a illustrates the network operation in normal state. Here, RU1 202a serves one antenna stream (Cell 0, eAxC 0) for Sector 0 (corresponding to antenna(s) 203a), and one antenna stream (Cell 1, eAxC 0) for Sector 1 (corresponding to antenna(s) 203b). Similarly, RU2 202b serves one antenna stream (Cell 1, eAxC 1) for Sector 1 (corresponding to antenna(s) 203b), and one antenna stream (Cell 2, eAxC 1) for Sector 2 (corresponding to antenna(s) 203c). In addition, RU3 202c serves one antenna stream (Cell 2, eAxC 1) for sector 2 (corresponding to antenna(s) 203c), and one antenna stream (Cell 0, eAxC 1) for Sector 0 (corresponding to antenna(s) 203a). In the configuration shown in Fig. 6a, Sectors 0, 1 and 2 (corresponding to antenna(s) 203a, 203b and 203c, respectively) are each configured as 2T2R configuration. In addition, DU server 201a is connected to RU1 202a, RU2 202b, and RU3 202c for sending the respective eAxC IDs.

Fig. 6b illustrates the scenario when RU1 has failed. In the example scenario shown in Fig. 6b, the management system reconfigures Sectors 0 and 1 to 1T1R configuration, and Sector 2 remains as 2T2R configuration. Given the failure of RU1, RU2 202b serves one antenna stream (Cell 1, eAxC 0) for Sector 1 (corresponding to antenna(s) 203b), and one antenna stream (Cell 2, eAxC 0) for Sector 2 (corresponding to antenna(s) 203c). In addition, RU3 202c serves one antenna stream (Cell 2, eAxC 1) for sector 2 (corresponding to antenna(s) 203c), and one antenna stream (Cell 0, eAxC 0) for Sector 0 (corresponding to antenna(s) 203a).

Note that Figs. 3b, 4b, 4c, 5c and 6b additionally illustrate the possible lean-traffic-hour configurations, i.e., the crossed-out RUs indicate the RUs that are shut down by the management system to save energy consumption. Note that the scenarios in Figs. 5b and 5c additionally illustrate the energy saving configuration with respect to one server being put in low power mode with no load on it.

The example configurations and methods according to the present disclosure also enable energy savings during lean hours by completely shutting down all the RUs in a given sector, instead of operating all RUs with reduced antenna streams as is the case today using known MIMO layer reduction techniques. The proposed example configurations and methods enable shutting down one or more RUs completely (including digital circuitry and Rx circuitry), instead of only partial shutdown (e.g., only partial number of antenna processing elements used in each RU) in conventional MIMO-layer-reduction methods. This complete shutdown according to the example configurations and methods maximizes the energy savings, as complete RUs are shut down instead of shutting down only some of the blocks in the RUs.

Example configurations and methods according to the present disclosure additionally provide resiliency of the server(s) by making use of multiple fibers on the RU to connect to, e.g., two or more servers and/or BBU units. This allows the site to be operational with reduced capacity when one of the servers/BBUs goes down and remaining individual server(s) cannot handle the full load of the site. When each of the two servers/BBUs is individually capable of handling the full load of the site by itself, then we can continue to provide service with full configuration of 4T4R across all sectors by simply moving all sectors/cells to be served from one server/BBU.

Example configurations and methods according to the present disclosure provide optimal solutions for redundancy and continuous coverage of sites in wireless networks, with minimal cost in terms of HW and energy consumption. The proposed configurations and methods can be used in several scenarios in addition to low-traffic scenario, including, but not limited to, cases of grid power outage, generator running out of fuel, battery running low, etc.

Example configurations and methods according to the present disclosure are also applicable to the following use case: an operator wants to mount all the RUs at a cell site in one installation event, but doesn't want to invest (e.g., for cost reasons) in multiple DU servers/basebands needed to support all the radios at the time of mounting all the RUs, and would like to retain the flexibility to add more hardware at a later stage as the capacity requirements increase over time. The example configurations and methods enable an implementation in which antennas and RUs can be reconfigured dynamically based on the needs. This enables a network operator to start the service with all the antennas/RUs connected to a single DU server and/or BBU, e.g., in 1T1R configuration, to offer coverage where there are not many network users initially. As the number of users increases (and hence the need to increase coverage and throughput), additional DU server and/or BBU can be added dynamically using the same design, and another port of the RU can be used to connect to the newly added DU server/BBU, as well as increasing the antenna pattern from 1T1R to, e.g., 2T2R or 4T4R, as needed. The example configurations and methods according to the present disclosure enable an operator to start the network operation with low cost solution fulfilling applicable laws and regulations regarding the launching of network service with minimum coverage at the lowest cost possible. At the same time, the example configurations and methods according to the present disclosure allow a network operator to start with a low initial hardware footprint and expand the network in the most cost effective manner, while offering the best possible coverage and resiliency from the start of the network operation.

In this section, example steps involved in an example RU resiliency technique (procedure) are discussed.
1. In normal operating conditions, the Management system configures the DU to use the full capacity of all three sectors with the required number of antennas per cell.
2. In case of a failure of an RU, the Management system detects the failure (or DU detects the failure and informs the Management system).
3. Upon detection of one or more RU failures, the Management system reconfigures the cells (sectors) in that site to operate with lower antenna count, e.g., as depicted in Figs. 3a to 6b, depending on the scenario.
   a. The Management system also reconfigures the eAxC ID to Logical Antenna Port ID mapping within the Layer1 in such a way that the eAxC IDs of the Antenna Ports that are still operational are remapped to Logical Port IDs (0/1/2, as per available Ports, after the failure).
4. Service continues in this reduced configuration until the failed RU is recovered (or replaced) and brought back to working condition, with no loss of coverage.
5. Once the RU recovers, it informs the Management system of its presence (e.g., via CALL HOME message, as specified in the O-RAN specifications).
6. The Management system reconfigures the cells with their full capacity, and the site is restored to its normal operating condition.

The example configurations and methods according to the present disclosure can be extended to multiple variants of the site configurations, including the following variations:
1. The proposed technique/solution can be extended to multiple carriers per RU within the same band(s) or across bands.
2. The proposed technique/solution can be extended to multiple RUs per sector configurations.
3. The proposed technique/solution can be generalized and/or extended to 2 or 4 or more sectors per site, as needed.
4. The proposed technique/solution can be extended to 2T2R, 8T8R or any antenna capacity configuration as permitted by 3GPP.
5. The proposed technique/solution can be generalized to all wireless technologies using nTmR configuration where m> 2 and n > 2.
6. The proposed technique/solution is equally applicable for CPRI based DU-RU splits (known as Split 8) and eCPRI based DU-RU splits (known as Split 7.2).
7. The proposed technique/solution can be generalized to integrated Cu/DU configurations with Split 7.2 or Split 8 RUs.
8. Site load can be distributed across servers for resiliency in multiple ways:
   a. More than 2 servers per site, as needed, to meet the capacity requirement.
   b. Either i) each server capable of handling the full site load, or ii) servers sharing the load, with each server capable of serving only part of the site load.
   c. Distribution of carriers of each site across different servers.
   d. Distribute the load on a sector-basis across two or more servers.
9. The proposed technique/solution is equally applicable to BBU (Traditional RAN HW which is custom made) or commercial off-the-shelf (COTS)-server-based solution.

According to an example embodiment of a method, the RF cables from an antenna of a given sector are connected to a plurality of RUs by distributing the antenna ports across them. In this example method, each RU serves a plurality of sectors (antenna coverage segments) by sharing the antenna processing chains (in DL and in UL). Scenarios of this method include, but not limited to, providing DU at a cell site, DU at a data center, CU and DU at a cell site, and CU and DU at a data center.

According to an example embodiment of a method, the network management system (or DU) reconfigures the cells served in a site when one or more RUs become non-functional, such that that all geographical segments and/or sectors of the site continue to be in service with a reduced antenna configuration. In an example embodiment, the reconfiguration further entails corresponding changes to the System Information blocks that inform the antenna capabilities of the cell, based on available active antenna processing chains. In an example embodiment, such redundancy can be extended to cover multiple RU failures. In an example embodiment, the reconfiguration can be applied to 2 antennas configuration, 4 antennas configuration and/or configurations involving more than 4 antennas. In an example embodiment, the cross polarizations of a given sector are always connected to one radio to maintain the orthogonality between the signals sent from the two cross polarizations.

According to an example embodiment of a method, the cells in a site are reconfigured to a lower antenna configuration in response to reduced traffic, thereby optimizing the energy consumption. In an example embodiment, powering down of RUs can be implemented for RUs which are not needed any more, e.g., due to reduced antenna processing capacity. In an example embodiment, powering down can be triggered under several scenarios including, but not limited to, low traffic, grid power outage, generator running out of fuel, and battery running low.

According to an example embodiment, a network with minimal overlap can be implemented. In an example embodiment, RF planning parameters can be relaxed to maximize the inter-site distances, thereby reducing overall network deployment cost and energy consumption.

According to an example embodiment, a network with spare capacity can be implemented by initially providing a network with all RUs and antennas wired-mounted on towers at the installation time, but serving only a limited capacity in the form of reduced antenna configurations to start with, using only a subset of RUs and a low-cost, low-capacity server. According to an example embodiment, the server SW can be upgraded on a future date to increase the overall site traffic capacity by powering on more RUs and servers as needed. According to an example embodiment, by powering down a plurality of RUs at the site based on the required capacity of antenna streams across sectors, the power consumption can be minimized in comparison to keeping all RUs powered on with only partial number of antenna processing elements used in each RU.

According to an example embodiment of a method, a cell site's CPU power consumption can be shared using a plurality of servers and/or BBUs of either the same or lower capacity, with each server connecting to all RUs using dedicated fiber connectors with each RU at the site. According to an example embodiment, the cells handled by each of the servers get distributed upon failure of one more servers/BBUs. According to an example embodiment, each server and/or BBU has lower capacity then the site's total computational need, and when one or more server and/or BBU fails, the remaining active servers are reconfigured to operate the cells with a reduced antenna count. According to an example embodiment, the remaining servers and/or BBUs are reconfigured to work with a lower load (e.g., in terms of connected users, throughput or processing capacity) to maintain the service for all sectors of a site without creating an outage.

According to an example embodiment of a method, reconfiguration of mapping between eAxC IDs to the Logical Port IDs within the DU is implemented based on the number of remaining operational ports (provided by operational RUs).

According to an example embodiment, a DU of a RAN can accommodate configuration changes from the network Management system and map the Logical Antenna ports of Layer1 (upper physical layer (UPHY)) to the eAxC IDs (AxC ID in case of O-RAN FH Split 8) as instructed by the network Management system.

According to an example embodiment, in the case of a failure of one or more RUs of a RAN, the cells are reconfigured with reduced antenna configuration to maintain full coverage, and a DU of the RAN is reconfigured to change the Logical Antenna port ID to the eAxC ID (AxC ID in case of Split 8) on the FH interface in such a way that the reduced configuration cell keeps the correct set of logical ports to be in operational state using the remaining RU/antenna ports which are still operational.

According to an example embodiment, in the case of a reduced power availability at a site, a shutdown of one or more server and/or BBU is triggered to conserve and/or prolong the service time using available power, by operating the cells with a lower capacity and/or lower antenna configuration.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:
3GPP: Third generation partnership project
5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
AxC ID: Antenna-Carrier identifier
BBU: baseband unit
BS: Base Station
CA: Carrier Aggregation
CAPEX: Capital Expenditure
C-plane: Control Plane
CPRI: Common Public Radio Interface
CPU: central processing unit
CU: Centralized Unit
CUS plane: Control User Synchronization plane
CU-CP: Centralized Unit - Control Plane
CU-UP: Centralized Unit - User Plane
DCI: downlink control indicator
DL: Downlink
DDDS: DL Data Delivery Status
DNN: Data Network Name
DRB: Data Radio Bearer
DU: Distributed Unit
eCPRI: enhanced Common Public Radio Interface
eAxC ID: Extended Antenna-Carrier identifier: a data flow for a single antenna (or spatial stream) for a single carrier in a single sector.
eNB: evolved NodeB
EPC: Evolved Packet Core
FH: Fronthaul
gNB: gNodeB
HW: hardware
LTE: long term evolution
LTE-A: LTE Advanced
M-plane: Management plane
MCS: modulation and coding scheme
MIMO: multiple input, multiple output
MMSE-IRC: Minimum mean square error - interference rejection combining
MMSE-MRC: Minimum mean square error - maximum-ratio combining
mmWave: millimeter wave
MNO: Mobile network operator
NBIOT: narrow-band internet of things
NR: New radio
OAM: Operation and management
O-DU: O-RAN Distributed Unit
O-RU: O-RAN Radio Unit
O-RAN: Open RAN (Basic O-RAN specifications are prepared by the O-RAN alliance)
OPEX: Operating Expense
PBCH: Physical Broadcast Channel
PCFICH: Physical Control Format Indicator Channel
PDCCH: Physical downlink Control Channel
PDCP: Packet Data Convergence Protocol
PDSCH: physical downlink shared channel
PHICH: Physical Hybrid ARQ Indicator Channel
PHY: physical layer
LPHY: lower physical layer
UPHY: upper physical layer
PUCCH: Physical Uplink Control Channel
PUSCH: Physical Uplink Shared Channel
QAM: quadrature amplitude modulation
QPSK: Quadrature Phase Shift Keying
RACH: random access channel
PRACH: physical random access channel
RF: radio frequency interface
RLC: Radio Link Control
RRC: Radio Resource Control
RRH: Remote Radio Head
RRM: Radio resource management
RRU: Remote radio unit
RU: Radio Unit
RS: reference signal
RSSI: received signal strength indicator
RPC: Remote procedure call
SMO: Service Management and Orchestration
S-plane: Synchronization plane
SCell: Secondary cell
SIMO: single input, multiple output
SINR: signal-to-interference-plus-noise ratio
SRS: Sounding reference signal
SSS: Secondary Synchronization Signal
SW: software
TB: transport block
TTI: Transmission Time Interval
TDD: Time division duplex
U-plane: User plane
UCI: Uplink Control Information
UE: user equipment
UL: uplink
UL DMRS: uplink demodulation reference signal
ULSCH: Uplink Shared Channel
vBBU: Virtualized baseband unit
VNF: Virtual Network Function

### DEFINITIONS:

Channel: the contiguous frequency range between lower and upper frequency limits.

C-plane: Control Plane: refers specifically to real-time control between O-DU and O-RU, and should not be confused with the UE's control plane.

DL: DownLink: data flow towards the radiating antenna (generally on the LLS interface).

LLS: Lower Layer Split: logical interface between O-DU and O-RU when using a lower layer (intra-PHY based) functional split.

M-Plane: Management Plane: refers to non-real-time management operations between the O-DU and the O-RU.

O-CU: O-RAN Control Unit - a logical node hosting PDCP, RRC, SDAP and other control functions.

O-DU: O-RAN Distributed Unit: a logical node hosting RLC/MAC/High-PHY layers based on a lower layer functional split.

O-RU: O-RAN Radio Unit: a logical node hosting Low-PHY layer and RF processing based on a lower layer functional split. This is similar to 3GPP's "TRP" or "RRH" but more specific in including the Low-PHY layer (FFT/iFFT, PRACH extraction).

OTA: Over the Air
S-Plane: Synchronization Plane: refers to traffic between the O-RU or O-DU to a synchronization controller which is generally an IEEE 1588 Grand Master (however, Grand Master functionality may be embedded in the O-DU).

U-Plane: User Plane: refers to IQ sample data transferred between O-DU and O-RU.

UL: UpLink: data flow away from the radiating antenna (generally on the LLS interface).

## Claims

1. A method for providing enhanced resiliency of a radio access network (RAN) cell site having multiple sectors associated with multiple cells, comprising
providing a first radio unit (RU) simultaneously serving a first set of sectors with a first set of antenna streams; and
providing a second RU simultaneously serving at least a second set of sectors with a second set of antenna streams; and
reconfiguring, by a network management unit, at least the first set of sectors with a reduced antenna configuration in the case of one of a failure or shutdown of the first RU, whereby all sectors of the cell site remain in service.

2. The method of claim 1, further comprising:
providing a third RU simultaneously serving at least a third set of sectors with a third set of antenna streams;
wherein, in the case of one of a failure or shutdown of the first RU, all sectors of the cell site are served by the second RU and the third RU to remain in service.

3. The method of claim 1, further comprising:
providing a third RU simultaneously serving at least a third set of sectors with a third set of antenna streams;
wherein, in the case of one of a failure or shutdown of the first and second RUs, all sectors of the cell site are served by the third RU to remain in service.

4. The method of claim 3, further comprising:
providing a first DU to serve the first RU, the second RU and the third RU for at least a first portion of at least one of the first, second and third set of antenna streams; and
providing a second DU to serve the first RU, the second RU and the third RU for at least a second portion of at least one of the first, second and third set of antenna streams;
wherein, in the case of one of a failure or shutdown of one of the first DU or the second DU, the remaining operational DU serves at least one operational RU to provide service to all sectors of the cell site.

5. The method of claim 1, wherein:
at least one of the first set of sectors and the second set of sectors is configured as one of two-transmitters-and-two-receivers antenna configuration, or four-transmitters-and-four-receivers antenna configuration; and
in the case of one of a failure or shutdown of the first RU, the at least one of the first sector, the second sector and the third sector is reconfigured as follows: one of i) from two-transmitters-and-two-receivers antenna configuration to one-transmitter-and-one-receiver antenna configuration, or ii) from four-transmitters-and-four-receivers antenna configuration to one of two-transmitters-and-two-receivers antenna configuration or one-transmitter-and-one-receiver antenna configuration.

6. The method of claim 2, wherein:
at least one of the first sector, the second sector and the third sector is configured as one of two-transmitters-and-two-receivers antenna configuration, or four-transmitters-and-four-receivers antenna configuration; and
in the case of one of a failure or shutdown of the first RU, the at least one of the first sector, the second sector and the third sector is reconfigured as follows: one of i) from two-transmitters-and-two-receivers antenna configuration to one-transmitter-and-one-receiver antenna configuration, or ii) from four-transmitters-and-four-receivers antenna configuration to one of two-transmitters-and-two-receivers antenna configuration or one-transmitter-and-one-receiver antenna configuration.

7. The method of claim 1, further comprising:
providing, in connection with the reconfiguring, changes to system information blocks indicating antenna capabilities, based on available active antenna processing chains.

8. The method of claim 2, further comprising:
providing, in connection with the reconfiguring, changes to system information blocks indicating antenna capabilities, based on available active antenna processing chains.

9. A system for providing enhanced resiliency of a radio access network (RAN) cell site having multiple sectors associated with multiple cells, comprising
a first radio unit (RU) simultaneously serving a first set of sectors with a first set of antenna streams; and
a second RU simultaneously serving at least a second set of sectors with a second set of antenna streams; and
a network management unit selectively reconfiguring at least the first set of sectors with a reduced antenna configuration in the case of one of a failure or shutdown of the first RU, whereby all sectors of the cell site remain in service.

10. The system of claim 9, further comprising:
a third RU simultaneously serving at least a third set of sectors with a third set of antenna streams;
wherein, in the case of one of a failure or shutdown of the first RU, all sectors of the cell site are served by the second RU and the third RU to remain in service.

11. The system of claim 10, further comprising:
a first DU to serve the first RU, the second RU and the third RU for at least a first portion of at least one of the first, second and third set of antenna streams; and
a second DU to serve the first RU, the second RU and the third RU for at least a second portion of at least one of the first, second and third set of antenna streams;
wherein, in the case of one of a failure or shutdown of one of the first DU or the second DU, the remaining operational DU serves at least one operational RU to provide service to all sectors of the cell site.

12. The system of claim 9, wherein:
at least one of the first set of sectors and the second set of sectors is configured as one of two-transmitters-and-two-receivers antenna configuration, or four-transmitters-and-four-receivers antenna configuration; and
the network management unit reconfigures the at least one of the first sector, the second sector and the third sector in the case of one of a failure or shutdown of the first RU, as follows: one of i) from two-transmitters-and-two-receivers antenna configuration to one-transmitter-and-one-receiver antenna configuration, or ii) from four-transmitters-and-four-receivers antenna configuration to one of two-transmitters-and-two-receivers antenna configuration or one-transmitter-and-one-receiver antenna configuration.

13. The system of claim 10, wherein:
at least one of the first sector, the second sector and the third sector is configured as one of two-transmitters-and-two-receivers antenna configuration, or four-transmitters-and-four-receivers antenna configuration; and
the network management unit reconfigures the at least one of the first sector, the second sector and the third sector in the case of one of a failure or shutdown of the first RU, as follows: one of i) from two-transmitters-and-two-receivers antenna configuration to one-transmitter-and-one-receiver antenna configuration, or ii) from four-transmitters-and-four-receivers antenna configuration to one of two-transmitters-and-two-receivers antenna configuration or one-transmitter-and-one-receiver antenna configuration.

14. The system of claim 9, wherein:
the network management unit is configured to provide, in connection with the reconfiguring, changes to system information blocks indicating antenna capabilities, based on available active antenna processing chains.

15. The system of claim 10, wherein:
the network management unit is configured to provide, in connection with the reconfiguring, changes to system information blocks indicating antenna capabilities, based on available active antenna processing chains.
